# EUROPEAN PATENT APPLICATION

(11) **EP 2 387 198 A1**
(43) Date of publication of application: **16.11.2011**
(21) Application number: 11155986.0
(22) Date of filing: 25.02.2011
(51) Int. Cl.: H04L 29/06, H04L 12/28, H04L 29/08

(54) **Content distribution system and gateway device, and program**

(30) Priority: 12.05.2010 JP 2010110460
(71) Applicant: Hitachi Solutions, Ltd., Tokyo 140-0002 (JP)
(72) Inventor: Ogawa, Makiko, Tokyo 140-0002 (JP); Nakamura, Yuichi, Tokyo 140-0002 (JP); Nobuoka, Shinya, Tokyo 140-0002 (JP); Shiina, Makoto, Tokyo 140-0002 (JP); Ohama, Nobuyuki, Tokyo 140-0002 (JP)
(74) Representative: Liesegang, Eva

(57) **Abstract**

A renderer (DMR) in a second local area network via an Internet is enabled to reproduce content in a first local area network. A content transmission system generates a virtual DMR corresponding to a DMR (content reproduction device) in a content reception system. A DMC (controller) and a DMS (content server) communicate with the virtual DMR. This enables content to be reproduced in an actual DMR in a different home network residing beyond the Internet without any modification on the DLNA standard. More specifically, the DMC and the DMS recognize the virtual DMR as if to be an actual DMR, communicate therewith. A transmission gateway device (transmission mechanism) relays communication destined for the virtual DMR (instructions and content) to a reception gateway device (reception mechanism). Also in the content reception system, the actual DMR is capable of processing communication from a different home network by communication only with the reception mechanism. This negates the need for modification on the DLNA standard.

## Description

### BACKGROUND OF THE INVENTION

### Field of the Invention

The present invention relates to a content distribution system and a gateway device and a program, and for example, relates to a system for remotely distributing content in conformity with the DLNA standard.

### Background Art

Utility forms whose objects are to view content recorded in an HDD recorder at home and content, such as image data of digital cameras and music data, stored in a PC, on a player device such as another television at home, have been developed. Standard specifications, such as DLNA (Digital Living Network Alliance), have become widespread.

According to the DLNA, a piece of content to be reproduced is designated among content stored in a content server referred to as DMS (Digital Media Server) using a content reproduction controller referred to as DMC (Digital Media Controller), and an instruction is issued to a content reproduction device referred to as DMR (Digital Media Renderer), thereby allowing the content reproduction device to acquire the piece of content from the content server and to reproduce the piece of content. A device that has both the content reproduction controller function and the content reproduction device and is referred to as DMP (Digital Media Player) may be used.

### SUMMARY OF THE INVENTION

Recently, for example, demands for utility forms where parents and a child living at separate homes share content have increased. In such a case, the child wishes to display video images and images of digital cameras held in a media server at home on a renderer, such as a television at the home of the parents. In this case, reproduction of the content is to be realized, not in the same local area network, but for example between different local area networks via the Internet. It is required that an instruction for reproduction is issued from a content transmission network, to which the content server holding the content is connected, and reproduction is made in a content reproduction device connected to another local area network via the Internet.

However, the DLNA is a standard for the same local area network, and only capable of connection between DLNA devices in the same local area network. Accordingly, this standard is incapable of referring to content between local area networks beyond the Internet. This requires a section which connects different local area networks to each other. However, if such a section is provided, the DLNA assumes a closed home network. Accordingly, devices connected to each other beyond a wide area network, such as the Internet, are required to frequently communicate packets with each other in order to continuously recognize mutual states. Such frequent packet communication via the Internet delays processing operation. Thus, a method without need for frequent packet communication via the Internet is required.

The present invention is made in view of such situations, and provides a highly convenient content distribution system and gateway device, and program.

In order to solve the above problems, a content distribution system according to the present invention generates a virtual DMR (content reproduction device) corresponding to a DMR on a content transmission system in a content reception system. A DMC (controller) and a DMS (content server) communicate with the virtual DMR. This enables content to be reproduced in an actual DMR in a different home network residing beyond the Internet without any modification on the DLNA standard. More specifically, the DMC and the DMS recognize the virtual DMR as if to be an actual DMR, communicate therewith. A transmission gateway device (transmission mechanism) relays communication destined for the virtual DMR (instructions and content) to a reception gateway device (reception mechanism). Also in the content reception system, the actual DMR is capable of processing communication from a different home network by communication only with the reception mechanism. This negates the need for modification on the DLNA standard.

Further features of the present invention will become apparent by embodiments for implementing the present invention and accompanying drawings.

The present invention can provide a highly convenient content distribution system and gateway device, and program.

### BRIEF DESCRIPTION OF THE DRAWINGS

FIG. 1 is a diagram showing a schematic configuration of a content distribution system according to the present invention.
FIG. 2 is a diagram showing a software configuration of a transmission mechanism 160.
FIG. 3 is a diagram showing a software configuration of a reception mechanism 170.
FIG. 4 is a diagram for illustrating an overview of processing of a device presence confirmation function.
FIG. 5 is a diagram for illustrating an overview of processing of an instruction relay function.
FIG. 6 is a diagram for illustrating an overview of processing of a content relay function.
FIG. 7 is a flowchart for illustrating processing of a request control function A of the transmission mechanism 160 in detail.
FIG. 8 is a flowchart for illustrating processing of a request control function B of the reception mechanism 170 in detail.
FIG. 9 is a flowchart for illustrating processing of a device presence confirmation function A of the transmission mechanism 160 in detail.
FIG. 10 is a flowchart for illustrating processing of a device presence confirmation function B of the reception mechanism 170 in detail.
FIG. 11 is a flowchart for illustrating processing of an instruction relay function A of the transmission mechanism 160 in detail.
FIG. 12 is a flowchart for illustrating processing of an instruction relay function B of the reception mechanism 170 in detail.
FIG. 13 is a flowchart for illustrating processing of a content relay function A of the transmission mechanism 160 in detail.
FIG. 14 is a flowchart for illustrating processing of a content relay function B of the reception mechanism 170 in detail.
FIG. 15 is a diagram showing an example of a configuration of a GUI for designating a reception gateway device corresponding to a content reproduction device (DMR) where reproduction of content is required.

### DETAILED DESCRIPTION OF THE PREFERRED EMBODIMENTS

Embodiments of the present invention realize a content distribution system that acquires a content list of DMSs in a local area network (home network) on the content transmission system, allows an operator on a transmission side to designate a piece of content to be viewed, and enables the piece of content to be reproduced on a DMR in another local area network.

The embodiments of the present invention will hereinafter be described with reference to the accompanying drawings. It should be noted that the embodiments are only examples for realizing the present invention and do not limit the technical scope of the present invention. Configurational elements common to the drawings are assigned with the same reference numbers.

### <Configuration of Content Distribution System>

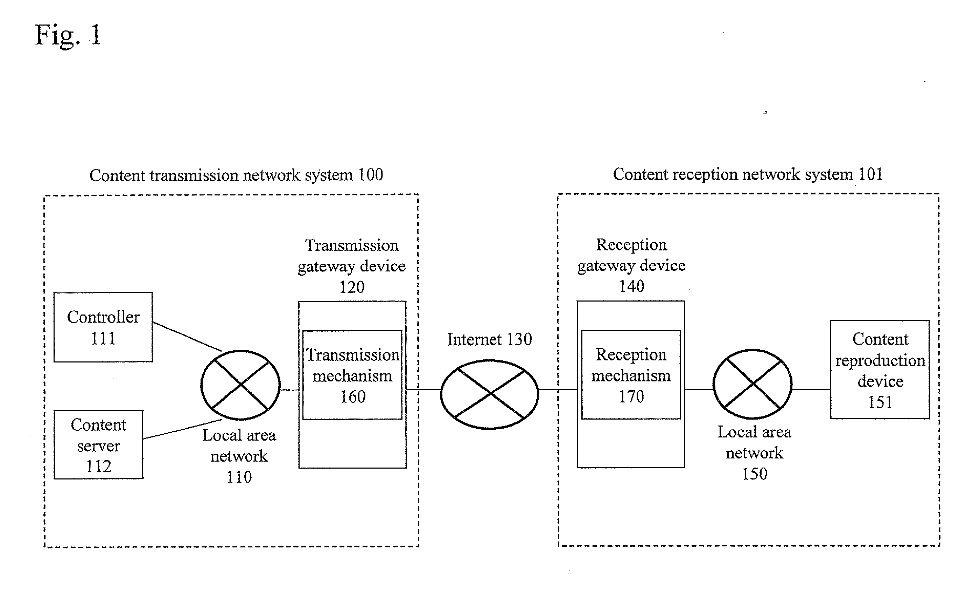

FIG. 1 is a diagram showing a schematic configuration of a content distribution system according to an embodiment of the present invention. The content distribution system includes a content transmission system 100 and a content reception system 101, which are connected to each other via the Internet 130 as a wide area network.

The content transmission system 100 includes a controller (DMC) 111, a content server (DMS) 112, and a transmission gateway device 120 including a transmission mechanism 160, which are connected to each other via a local area network (e.g., a home network, such as a LAN) 110 in a wired or wireless manner.

The content reception system 101 includes a content reproduction device (DMR) 151, and a reception gateway device 140 including a reception mechanism 170, which are connected to each other via a local area network (e.g., a home network, such as a LAN) 150 in a wired or wireless manner.

These devices are capable of broadcast communication.

The controller 111 includes hardware as a computer (a CPU, a main memory and a network communication interface) having a network communication capability, and has a function capable of finding the devices connected to the local area network 110 and a function capable of controlling the devices. Examples of controllers having such functions include a DMC specified in the DLNA.

The content server 112 includes hardware as a computer (a CPU, a main memory and a network communication interface) having a network communication capability, and includes a function of disclosing the own device in the local area network 110 and a function of distributing stored content. Examples of content servers having such functions include a DMS specified in the DLNA. The controller 111 and the content server 112 may integrally be configured as one device.

The content reproduction device 151 includes hardware as a computer (a CPU, a main memory and a network communication interface) having a network communication capability, and a display, and has a function of disclosing the own device in the local area network 150 and a function of acquiring a piece of content selected by the controller from the network and reproducing the acquired piece of content. Examples of content reproduction devices having such functions include a DMR specified in the DLNA.

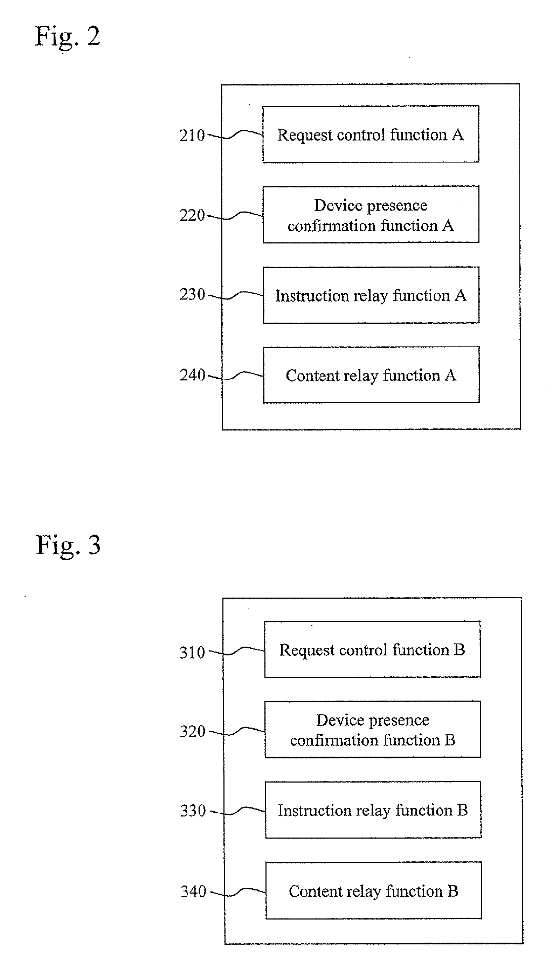

The transmission and reception gateway devices 120 and 140 include hardware as computers (CPUs, main memories and at least two network communication interfaces) having network communication capabilities, and are connected to the local area network 110 or 150 and the Internet 130 so as to be capable of relaying communication between the Internet 130 and the local area network 110 or 150. The transmission mechanism 160 has a function of mediating the controller 111 or the content server 112 and the reception mechanism 170. The detailed configuration of the transmission mechanism 160 will be described with reference to FIG. 2.

The reception mechanism 170 has a function of mediating the content reproduction device 151 and the transmission mechanism 160. The detailed configuration of the reception mechanism 170 will be described with reference to FIG. 3.

### <Internal Configuration of Transmission Mechanism>

FIG. 2 is a diagram showing a software configuration of the transmission mechanism 160. The transmission mechanism 160 includes a request control function A210, a device presence confirmation function A220, an instruction relay function A230, and a content relay function A240. These functions may be configured by a software program or in modules. Hereinafter, descriptions of processing operations may adopt a "function (program)" or a "module" as an operation subject (subject) for the sake of illustration. However, the function (program) or the module performs a prescribed process by being executed in a processor using a memory and a communication port (communication control device). Accordingly the process may be deemed to be replaced with a process whose operation subject (subject) is the processor. The process disclosed such that the subject is the function (program) or the module may be a process performed by a computer or an information processing device. A part of or the entire parts may be realized by dedicated hardware.

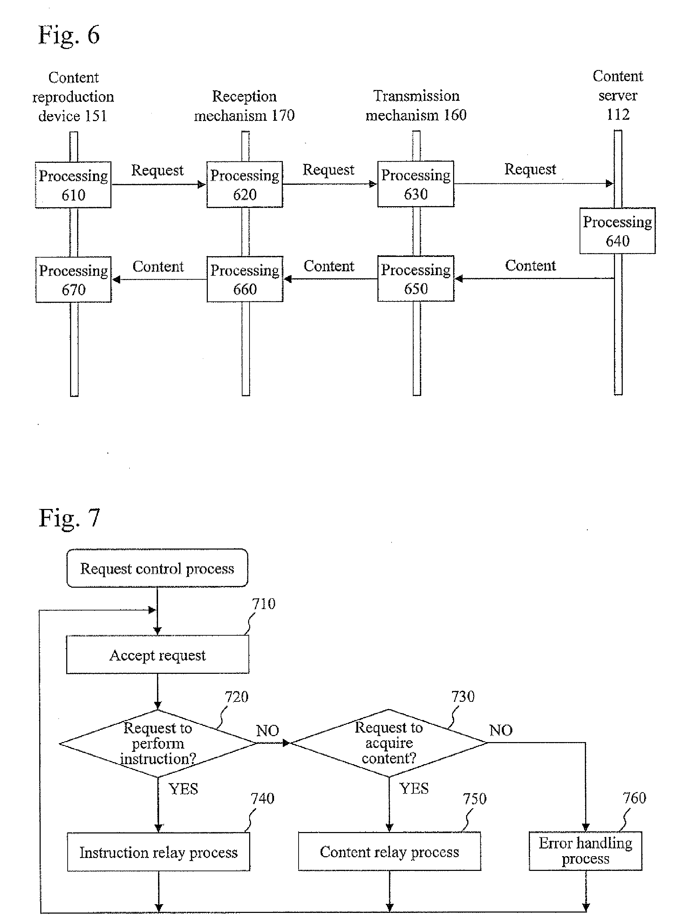

The request control function A210 is a function of processing a request by the controller 111 or the reception mechanism 170 according to the contents thereof. The details will be described in FIG. 7.

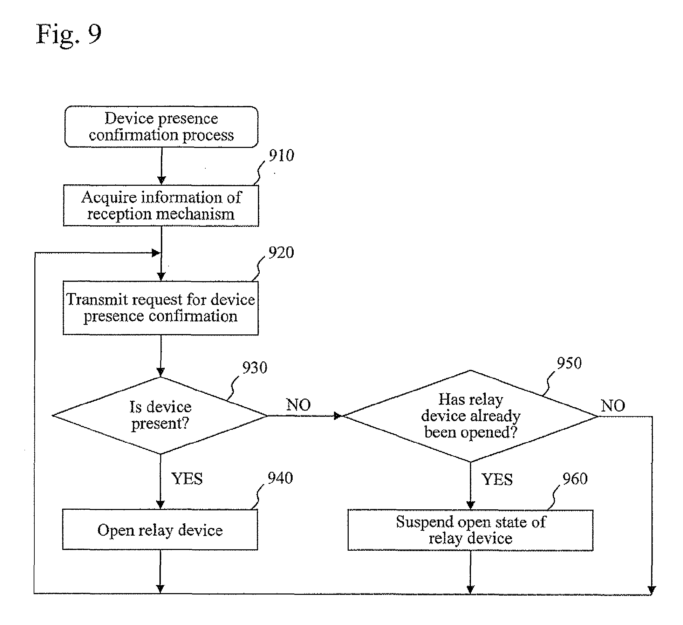

The device presence confirmation function A220 refers to the designated reception mechanism 170 to confirm presence or absence of the content reproduction device 151. If the content reproduction device 151 is present, the device presence confirmation function A220 releases information of the content reproduction device 151 as a device present in the same local area network. More specifically, if the presence of the content reproduction device 151 is confirmed, the device presence confirmation function A220 creates a virtual DMR in the content transmission system 100 (e.g., in the transmission gateway device 120) so as to be capable of recognizing and controlling the content reproduction device 151 as a device in the same local area network. The device presence confirmation function A220 repeats the operation when the content transmission system 100 is activated and periodically thereafter and performs device presence confirmation. The details will be described with reference to FIG. 9.

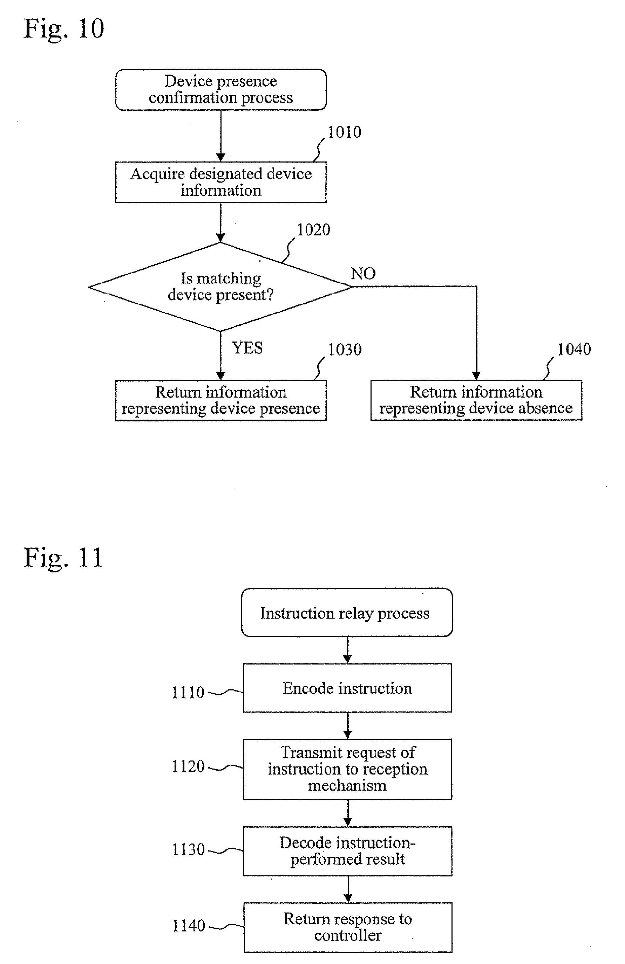

The instruction relay function A230 has a function of transmitting an instruction transmitted from the controller 111 to the reception mechanism 170 and of returning the performed result to the controller 111. The details will be described with reference to FIG. 11.

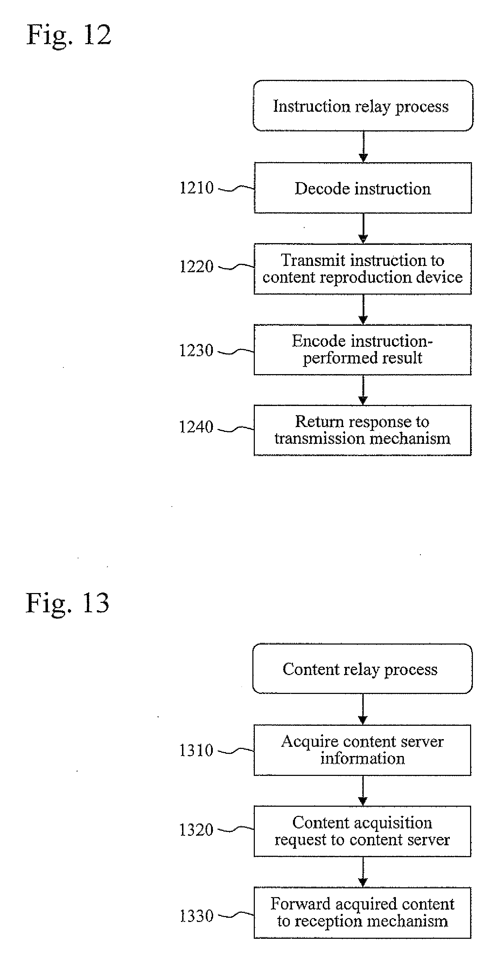

The content relay function A240 has a function of relaying a content acquisition request by the reception mechanism 170. The details will be described with reference to FIG. 13.

### <Internal Configuration of Reception Mechanism>

FIG. 3 is a diagram showing a software configuration of the reception mechanism 170. The reception mechanism 170 includes a request control function B310, a device presence confirmation function B320, an instruction relay function B330, and a content relay function B340. These functions may also be configured by a software program or in modules in the same way as the transmission mechanism 160.

The request control function B310 is a function of processing a request by the content reproduction device 151 or the transmission mechanism 160 according to the contents thereof.

The device presence confirmation function B320 has a function of processing a request by the device presence confirmation function A220 of the transmission mechanism 160. The details will be described with reference to FIG. 10.

The instruction relay function B330 has a function of processing a request by the instruction relay function A230 of the transmission mechanism 160. The details will be described with reference to FIG. 12.

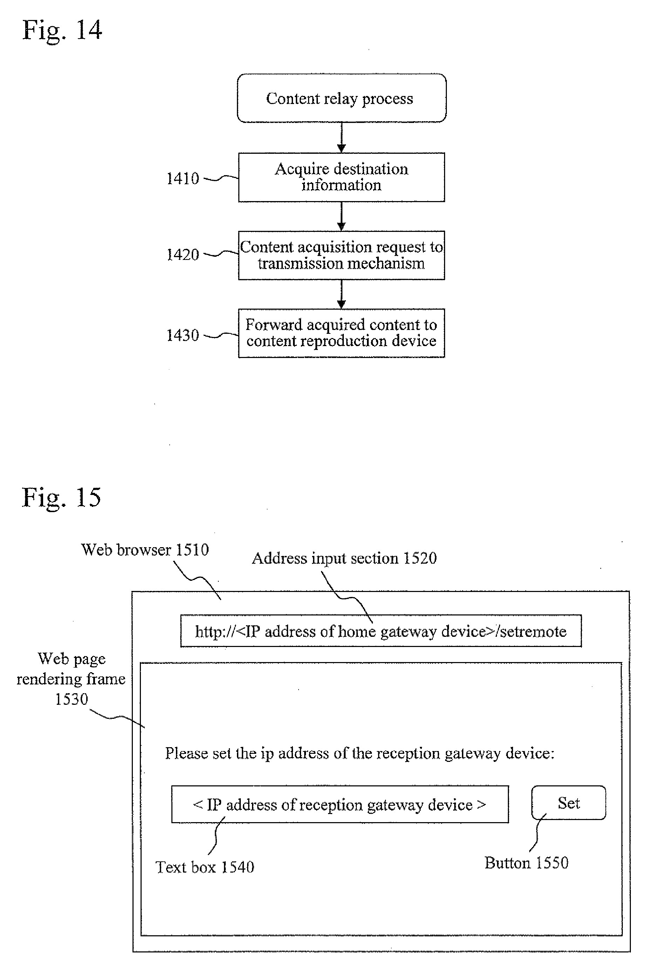

The content relay function B340 has a function of relaying a content acquisition request from the content reproduction device 151. The details will be described with reference to FIG. 14.

### <Overview of Processing of Device Presence Confirmation Function>

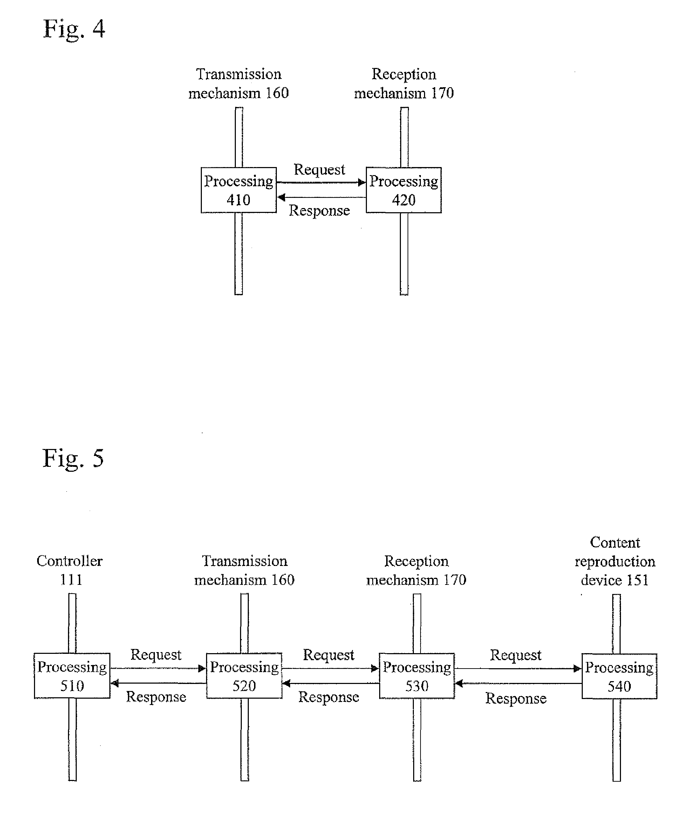

FIG. 4 is a diagram for illustrating an overview of processing of the device presence confirmation function performed between the transmission mechanism 160 and the reception mechanism 170.

In a process 410, the device presence confirmation function A220 of the transmission mechanism 160 transmits a request for device presence confirmation to the reception mechanism 170. The device presence confirmation function A220 then determines whether the device (content reproduction device) is present or not on the basis of the result returned from the reception mechanism 170. If the device is present, the device presence confirmation function A220 opens a device recognizable as the content reproduction device 151 in the local area network 110 instead of the content reproduction device 151. More specifically, the virtual DMR is generated in the transmission mechanism 160, and recognized as the content reproduction device 151. The process 410 is periodically repeated, and the device presence confirmation is performed.

In a process 420, when the device presence confirmation function B320 of the reception mechanism 170 receives the request for device presence confirmation from the transmission mechanism 160, the device presence confirmation function B320 determines whether the content reproduction device 151 is present or not, and returns the result to the transmission mechanism 160.

### <Overview of Processing of Instruction Relay Function>

FIG. 5 is a diagram for illustrating an overview of processing of an instruction relay function performed between the content transmission system 100 and the content reception system 101.

In a process 510, when an operator inputs (selects) an instruction (e.g., content reproduction instruction) into the content transmission system 100, the controller 111 passes the selected instruction to the transmission mechanism 160.

In a process 520, the instruction relay function A230 of the transmission mechanism 160 encodes the instruction received from the controller 111, and passes the instruction to the reception mechanism 170. Here, for example, the protocol of the DLNA is converted into the http, which is a protocol of the Internet. The instruction relay function A230 decodes the performed result of the instruction returned from the reception mechanism 170 (conversion from the http protocol into the DLNA protocol), and returns the result to the controller 111.

In process 530, the instruction relay function B330 of the reception mechanism 170 decodes the instruction received from the transmission mechanism 160 (conversion from the http protocol to the DLNA protocol), and passes the instruction to the content reproduction device 151. The instruction relay function B330 encodes the performed result returned from the content reproduction device 151 (conversion from the DLNA protocol into the http protocol), and returns the result to the transmission mechanism 160.

In process 540, the content reproduction device 151 performs the instruction passed from the reception mechanism 170, and returns the performed result to the reception mechanism 170.

### <Overview of Processing of Content Relay Function>

FIG. 6 is a diagram for illustrating an overview of processing of a content relay function performed between the content transmission system 100 and the content reception system 101.

In a process 610, when the content reproduction device 151 receives a content reproduction instruction from the controller 111 via the instruction relay function A230 and the instruction relay function B330, the content reproduction device 151 requests content acquisition from the reception mechanism 170.

In a process 620, the reception mechanism 170 acquires destination information included in the request, and requests for content acquisition from the transmission mechanism 160.

In process 630, the transmission mechanism 160 acquires content server information from the request received from the reception mechanism 170, and requests content acquisition from the content server 112.

In a process 640, the content server 112 responds to the content acquisition request, and transmits the corresponding content to the transmission mechanism 160.

In a process 650, the transmission mechanism 160 transmits the content acquired from the content server 112 to the reception mechanism 170.

In a process 660, the reception mechanism 170 transmits the content acquired from the transmission mechanism 160 to the content reproduction device 151.

In a process 670, the content reproduction device 151 reproduces the content acquired from the reception mechanism 170.

### <Processing of Request Control Function in Transmission Mechanism in Detail>

FIG. 7 is a flowchart for illustrating processing of a request control function of the transmission mechanism 160 in detail.

First, the request control function A210 of the transmission mechanism 160 accepts a request by the controller 111 or the reception mechanism 170 (step 710).

The request control function A210 determines whether the request is a request to perform an instruction from the controller 111 or not (step 720). This instruction request includes an instruction where the controller (DMC) 111 instructs the content reproduction device (DMR) 151 to acquire content from the content server (DMS) 112, and an instruction where the DMC instructs the DMR to reproduce the acquired content.

If the instruction is the request to perform an instruction (step 720; YES), the instruction relay function A230 performs the instruction relay process (step 740). The details of the instruction relay process will be described with reference to FIG. 10. Subsequently, the processing returns to the request acceptance process (step 710), and the next request is waited.

On the other hand, if the request is not the request to perform an instruction (step 720; NO), the request control function A210 causes the processing to transition to step 730, and determines whether the request is a content acquisition request by the reception mechanism 170 (more specifically, the content acquisition request by the DMR) or not (step 730).

If the request is the content acquisition request (step 730; YES), the content relay function A240 performs the content relay process (step 750). The details of the content relay process will be described with reference to FIG. 13. Subsequently, the processing returns to the request acceptance process (step 710), and the next request is waited.

If the request is not the content acquisition request (step 730; NO), the request control function A210 performs an error handling process (step 760). The processing returns to the request acceptance process (step 710), and the next request is waited.

### <Processing of Request Control Function in Reception Mechanism in Detail>

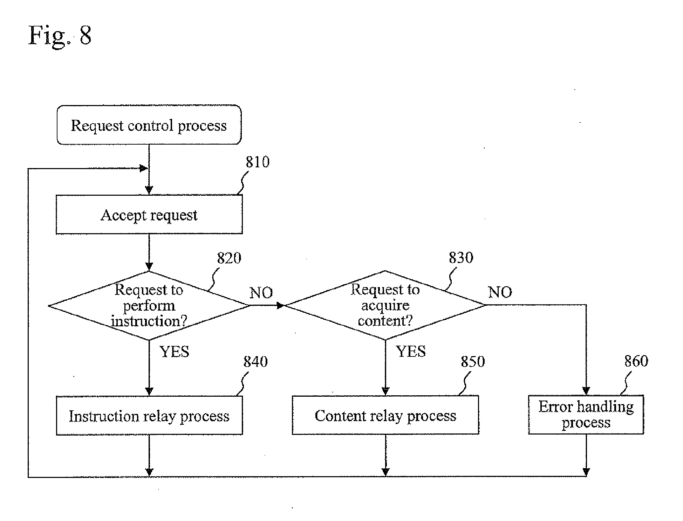

FIG. 8 is a flowchart for illustrating processing of a request control function of the reception mechanism 170 in detail.

First, the request control function B310 of the reception mechanism 170 accepts a request by the content reproduction device 151 or the transmission mechanism 160 (step 810).

The request control function B310 determines whether the request is a request to perform an instruction from the transmission mechanism 160 or not (step 820). The details of the instruction request are as described with reference to FIG. 7.

If the request is the request to perform an instruction (step 820; YES), the instruction relay process function B330 performs the instruction relay process (step 840). The details of the instruction relay process will be described with reference to FIG. 12. Subsequently, the processing returns to the request acceptance process (step 810), and the next request is waited,

If the request is not the request to perform an instruction (step 820; NO), the request control function B310 determines whether the request is a content acquisition request by the content reproduction device 151 or not (step 830). If the request is the content acquisition request (step 830; YES), the content relay function B340 performs the content relay process (step 850). The details of the content relay process will be described with reference to FIG. 14. Subsequently, the processing returns to the request acceptance process (step 810), and the next request is waited.

If the request is not the content acquisition request (step 830; NO), the request control function B310 performs an error handling process (step 860). Subsequently, the processing returns to the request acceptance process (step 810), and the next request is waited.

### <Processing of Device Confirmation Function of Transmission Mechanism in Detail>

FIG. 9 is a flowchart for illustrating processing of a device presence confirmation function A220 of the transmission mechanism 160 in detail.

First, the device presence confirmation function A220 acquires preset information of a destination of communication (e.g., the address of reception mechanism 170 in the reception gateway device) (step 910). The information of a destination of communication is, for example, information that an operator of the transmission system 101 provides using a GUI for inputting an instruction (e.g., see aftermentioned FIG. 15). The address itself may be input. In a certain GUI, an address may be selectable from addresses of the reception mechanisms preliminarily registered with respect to categories, such as parents, brothers and sisters, relatives, and friends.

The device presence confirmation function A220 then transmits the request for device presence confirmation to the reception mechanism 170 acquired in step 910 (step 920).

The device presence confirmation function A220 determines whether the device (content reproduction device: DMR) is present or not on the basis of a result returned from the reception mechanism 170 (step 930). If the device is present (step 930; YES), the processing transitions to step 940. If the device is absent (step 930; NO), the processing transitions to step 950.

If it is determined that the device is present, the device presence confirmation function A220 generates and opens a relay device to be recognized as a controller reproduction device by the controller 111 in the content transmission system 100 (e.g., in the transmission gateway device 120) instead of the controller reproduction device 151 in the content reception system 101 such that the controller 111 is capable of communicating with the created virtual DMR (step 940). Here, the relay device is a device (virtual DMR) that is recognizable as a controller reproduction device in the local area network 110 on behalf of the controller reproduction device 151.

If it is determined that the device is absent, the device presence confirmation function A220 determines whether a relay device has already been opened or not (step 950). That is, irrespective of notification from the reception mechanism 170 representing that the presence of the device cannot be confirmed, if the relay device (virtual DMR) has been opened, it is required to suspend the open state (delete the virtual DMR).

If the device has already been opened (step 950; YES), the device presence confirmation function A220 suspends the open state of the relay device (step 960).

After the completion of the process in step 940 or 960, the processing returns to step 920, and periodic device presence confirmation processes are performed.

### <Processing of Device Confirmation Function in Reception Mechanism in Detail>

FIG. 10 is a flowchart for illustrating processing of a device presence confirmation function B320 of the reception mechanism 170 in detail.

First, the device presence confirmation function B320 acquires preset information of content reproduction device 151 (step 1010). The information is designated by the content reception system 101. For example, if a plurality of content reproduction device are present in the content reception system 101, an operator on the reception side may select a device on which he/she wishes to perform reproduction. Instead, the device may be arbitrary. If an arbitrary device is designated, for example, the content is reproduced on at least one of the content reproduction devices whose power is on. In the local area network (home network) 150, if a plurality of content reproduction devices (DMR) are present, the DMRs may be assigned with respective unique IDs, and designation of the IDs may select a device for reproduction.

The device presence confirmation function B320 then determines whether the content reproduction device matching with the information acquired in step 1010 is present or not (step 1020).

If the matching content reproduction device is present (step 1020; YES), the device presence confirmation function B320 returns information representing presence of the device to the transmission mechanism 160 (step 1030).

On the other hand, if the matching content reproduction device is absent (step 1020; NO), the device presence confirmation function B320 returns information representing absence of the device to the transmission mechanism 160 (step 1040).

### <Processing of Instruction Relay Function of Transmission Mechanism in Detail>

FIG. 11 is a flowchart for illustrating processing of an instruction relay function A230 of the transmission mechanism 160 in detail.

First, the instruction relay function A230 decodes an instruction from the controller 111 into a format to be passed to the reception mechanism 170 (step 1110). For example, the instruction is converted from the protocol of the DLNA to the http protocol for the Internet. In a case where the instruction is a reproduction instruction and presence position information of the content server 112 is passed, information of the transmission mechanism 160 is added to original information. The instructions include an instruction that notifies the position where content resides and indicates to acquire the content from the notified position (in this case, the position of the content and the position of the transmission mechanism 160 are notified. This is because, if the position of the content is directly notified, the position is inaccessible.), and a reproduction instruction for indicating reproduction of the acquired content (in this case, information of the address of the transmission mechanism 160 is unnecessary).

Next, the instruction relay function A230 transmits the instruction decoded in step 1110 to the reception mechanism 170 (step 1120).

The instruction transmitted to the reception mechanism 170 is performed by the content reception system 101. The instruction relay function A230 decodes a performed result returned from the reception mechanism 170 into a format to be passed to the controller 111 (step 1130). In this case, the conversion is from the http protocol to the DLNA protocol.

Further, the instruction relay function A230 returns the performed result decoded in step 1130 to the controller 111 (step 1140).

### <Processing of Instruction Relay Function in Reception Mechanism in Detail>

FIG. 12 is a flowchart for illustrating processing of an instruction relay function B330 of the reception mechanism 170 in detail.

First, the instruction relay function B330 decodes an instruction transmitted from the transmission mechanism 160 into a format to be passed to the content reproduction device 151 (step 1210). For example, the instruction is converted from the format of the http protocol to the format of the DLNA protocol. As with the processing in FIG. 11, in a case where the presence position information of the content server is passed according to the reproduction instruction, information of the reception mechanism 170 is also added to the passed information. The information of the reception mechanism 170 is required when the content reproduction device 151 acquires content on content reproduction. That is, the devices on the reception side can recognize the instruction as an event occurring in the local area network (home network) 150 even if the instruction has been transmitted from the transmission side. For example, the content reproduction device (DMR) 151 only communicates with the reception mechanism 170 without recognizing the transmission system 100.

The instruction relay function B330 transmits the instruction decoded in step 1210 to the content reproduction device 151 (step 1220).

The content reproduction device 151 performs the instruction. The instruction relay function B330 encodes a performed result returned from the content reproduction device 151 into a format to be passed to the transmission mechanism 160 (step 1230). For example, the performed result is converted from the format of the DLNA protocol to the format of the http protocol.

The instruction relay function B330 then returns the performed result encoded in step 1230 to the transmission mechanism 160 (step 1240).

### <Processing of Content Relay Function of Transmission Mechanism in Detail>

FIG. 13 is a flowchart for illustrating processing of a content relay function A240 of the transmission mechanism 160 in detail.

First, the content relay function A240 acquires information of a position where the content server 112 resides (address information) from a request passed from the reception mechanism 170 (step 1310).

The content relay function A240 then transmits a content acquisition request to the content server 112 acquired in step 1310 (step 1320).

Subsequently, the content relay function A240 forwards the content acquired from the content server 112 to the reception mechanism 170 (step 1330).

### <Processing of Content Relay Function of Reception Mechanism in Detail>

FIG. 14 is a flowchart for illustrating processing of a content relay function B340 of the reception mechanism 170 in detail.

First, the content relay function B340 acquires destination information to the transmission mechanism 160 from the request received from the content reproduction device 151 (step 1410).

The content relay function B340 then transmits a content acquisition request to the transmission mechanism 160 at the destination acquired in step 1410 (step 1420).

Subsequently, the content relay function B340 forwards the content acquired from the transmission mechanism 160 to the content reproduction device 151 (step 1430).

### <GUI for Designating Gateway Device (Example)>

FIG. 15 is a diagram showing an example of a configuration of a graphical user interface (GUI) where an operator on the transmission side designates the address of the reception gateway device in step 910 in FIG. 9.

In this embodiment, the GUI can be provided by a web browser 1510. The GUI includes an address input section 1520 for inputting the IP address of the home gateway, and a web page rendering frame 1530. The web page rendering frame 1530 includes a text box 1540 for inputting an IP address of the reception gateway device, and a setting button 1550 for determining the input address.

In order to display the GUI, first, the transmission mechanism 160 activates the simple web server according to an operation by the operator on the transmission side, and displays (opens) the GUI on the display of the transmission system. The operator on the transmission side then accesses the GUI page using a PC or the like. Further, the operator inputs the IP address of the reception gateway device 140, and clicks the setting button 1550, thereby determining the input address.

### <Update of Program in Gateway Device>

It is assumed that the standard such as DLNA for distributing content is periodically enhanced. In order to accommodate such change of situations, it is required to update mediation programs in the transmission and reception gateway devices. The update of the program in the gateway device is typically performed by updating firmware. However, this entails suspension and restart of the devices, thereby impairing availability of the local area network during these events. In order to allow the mediation program to be updated without suspension and restart of the devices, the mediation program is performed on a software management framework capable of installing and uninstalling software on a module by module basis, such as the OSGi framework. This enables the mediation program to be updated without suspension of the gateway device.

### <Conclusion>

This embodiment provides the reception mechanism and the transmission function for the gateway device that mediates the local area network to which the content server, such as the DMS, and the content reproduction device, such as the DMR, are connected and the Internet.

The transmission mechanism holds information (address information: designated by the operator) for connection to the reception mechanism of the reception gateway device in the content reception system connected via the Internet. The transmission mechanism then operates in the transmission gateway device provided in the content transmission system to which the content server (DMS) is connected. In the content reception system to which the content reproduction device, such as the DMR, is connected, the reception mechanism operates in the reception gateway device.

In a case where the content server (DMS) is present in the same local area network, the transmission mechanism transmits, to the reception mechanism, information for connection to the content server (DMS).

The transmission mechanism, having received a request for acquiring information by the content reproduction device (DMR) through the content reproduction controller (DMC), notifies information of the content reproduction device (DMR) in the content reception system as a device present in the same local area network (generates the virtual DMR in the content distribution system). Thus, on the content reproduction controller (DMC), the content reproduction device (DMR) in another network is displayed as a device in the same local area network in the device list. This allows the content reproduction device (DMR) in the same local area network and the content reproduction device (DMR) in another local area network via the Internet to be handled according to the same operation. That is, the virtual content reproduction device (DMR) and the actual content reproduction device (DMR) are configured so as to operate in conjunction with each other.

When the content reproduction controller (DMC) issues a reproduction instruction to the content reproduction device (DMR) in the content reception system, the content reproduction instruction is transmitted from the transmission mechanism to the reception mechanism, and information of the reproduction instruction is transported from the reception mechanism to the designated content reproduction device (DMR).

The content reproduction device (DMR), having received the reproduction instruction, transmits the content transmission request to the designated content server (DMS). If the designated content server (DMS) is present in the transmission mechanism side, the reception mechanism transmits the content transmission request to the transmission mechanism, and the transmission mechanism transmits the content transmission request to the content server (DMS). The content server (DMS), having received the content transmission request, transmits content to the transmission mechanism, thereby transmitting the content from the transmission mechanism to the content reproduction device (DMR) in the content reception side network via the reception mechanism.

As described above, this embodiment enables the content in the content server (DMS) in the first local area network (first home network) to be reproduced in the content reproduction device (DMR) in the second local area network (second home network) via the Internet. This allows the functions provided by the DLNA standard to be enhanced to support content distribution via the Internet without any need to modify the DLNA standard.

Further, the functions of the reception mechanism and the transmission mechanism in the transmission and reception gateway devices transmit information as if the content server (DMS) that resides in the different local area network beyond the Internet and can be referred to is a device residing in the same local area network. Accordingly, the content list can be acquired at the content reproduction controller (DMC), and the content reproduction instruction can be issued to the content reproduction device (DMR), without any need to consider the physical location of the device.

The entire functions are realized in the reception mechanism and the transmission mechanism in the gateways. Accordingly, the DLNA program can be realized by a product compliant with the DLNA standard without a special function.

This embodiment can be realized by software program code realizing the aforementioned functions. In this case, a storing medium recorded with the program code is provided for a system or a device, a computer (CPU or MPU) of the system or the device reads the program code recorded in the storing medium. In this case, the program code read from the storing medium realizes the aforementioned functions of the embodiment, and the program code itself and the storing medium stored therewith configure the present invention. For example, a flexible disk, a CD-ROM, a DVD-ROM, a hard disk, an optical disk, a magnetooptical disk, a CD-R, a magnetic tape, a nonvolatile memory card, a ROM and the like are used as the storing medium for providing such program code.

Instead, an OS (operating system) or the like operating in the computer according to instructions of the program code may perform a part or the entire parts of the actual processing so as to realize the aforementioned functions of the embodiment. After the program code read from the storing medium are written on memory of the computer, a CPU and the like of the computer may perform a part or the entire parts of the actual processing according to the instructions of the program code so as to realize the aforementioned functions of the embodiment.

Instead, software program code realizing the functions of the embodiment may be distributed via a network, the code is stored in a storing section, such as a hard disk or a memory, or a storing medium, such as a CD-RW or a CD-R, and, at the point of use, the computer (or a CPU or a MPU) of the system or the device may read and perform the program code stored in the storing section or the storing medium.

As described above, this embodiment allows content to be reproduced in the DMR in the local area network different from the local area network where the DMC is present, without modifying the functions for the local area network in the functions included in the DMC, the DMS and the DMR in the DLNA, and without communication from the DMC via the wide area network more than necessary.

## Claims

1. A content distribution system connecting a content transmission system and a content reception system via an Internet, and reproducing content included in the content transmission system, in the content reception system,
wherein the content transmission system comprises a DMC and a DMS complying with a DLNA standard and a transmission gateway device,
wherein the content reception system comprises a DMR complying with the DLNA standard and a reception gateway device, and,
wherein the transmission gateway device generates a virtual DMR corresponding to the DMR included in the content reception system, in the content transmission system, and performs control so as to be capable of communication between the virtual DMR, and the DMC and the DMS.

2. A content distribution system according to claim 1,
wherein the transmission gateway device, if communication is performed from the DMC and the DMS to the virtual DMR, relays an instruction or content from the DMC and the DMS to the reception gateway device via the Internet, and
the reception gateway device transmits the instruction or the content received from the transmission gateway device to the actual DMR in the content reception system
such that the virtual DMR and the actual DMR operate in conjunction with each other.

3. A content distribution system according to claim 1 or 2,
wherein, in the content transmission system, the DMC, the DMS and the transmission gateway device are connected to each other via a first home network, and,
in the content reception system, the DMR and the reception gateway device are connected to each other via a second home network.

4. A content distribution system according to one of the preceding claims,
wherein the transmission gateway device converts a data format of the instruction from a DLNA protocol to an http protocol, and transmits a converted instruction to the reception gateway device, and
the reception gateway device converts the instruction of the http protocol received from the transmission gateway device to the DLNA protocol, and transmits the converted instruction to the actual DMR.

5. A content distribution system according to one of the preceding claims,
wherein the transmission gateway device confirms whether the operable DMR is present in the content reception system or not, and generates the virtual DMR in the content transmission system if the operable DMR is present.

6. A content distribution system according to claim 5,
wherein the transmission gateway device, after generating the virtual DMR, confirms whether the operable DMR is present in the content reception system or not again, and, if the operable DMR corresponding to the virtual DMR is absent, suspends communication from the DMC and DMS to the virtual DMR.

7. A content distribution system according to one of the preceding claims,
wherein the transmission gateway device provides a user interface for designating the reception gateway device including a target DMR to reproduce content,
the DMC in the content distribution system transmits a content acquisition instruction to the virtual DMR corresponding to the target DMR,
the transmission gateway device acquires the content acquisition instruction transmitted to the virtual DMR, and transmits the content acquisition instruction to the reception gateway device designated by the user interface,
the reception gateway device transmits the content acquisition instruction to the target DMR,
the target DMR transmits the content acquisition request to the reception gateway device, responsive to the content acquisition instruction,
the reception gateway device transmits the content acquisition request to the transmission gateway device,
the transmission gateway device acquires desired content from the DMS and transmits the desired content to the reception gateway device, according to the content acquisition request, and
the reception gateway device transmits the desired content to the target DMR.

8. A content distribution system according to claim 7,
wherein the DMC transmits a content reproduction instruction to the virtual DMR corresponding to the target DMR,
the transmission gateway device acquires the content reproduction instruction transmitted to the virtual DMR, transmits the content reproduction instruction to the reception gateway device designated by the user interface,
the reception gateway device transmits the content reproduction instruction to the target DMR, and
the target DMR reproduces the desired content acquired responsive to the content reproduction instruction.

9. A gateway device of a content transmission system of a content distribution system connecting the content transmission system and a content reception system via an Internet, and reproducing content included in the content transmission system, in the content reception system,
wherein, in the content transmission system, the gateway device is connected to a DMC or a DMS complying with a DLNA standard,
generates a virtual DMR corresponding to the DMR included in the content reception system, in the content transmission system, and performs control so as to be capable of communication between the virtual DMR, and the DMC and the DMS.

10. A gateway device according to claim 9,
wherein the gateway device, if communication is performed from the DMC and the DMS to the virtual DMR, relays an instruction or content from the DMC and the DMS to the content reception system via the Internet, and
performs control such that the virtual DMR and the actual DMR operate in conjunction with each other.

11. A gateway device according to claim 9 or 10,
wherein the gateway device confirms whether the operable DMR is present in the content reception system or not, and generates the virtual DMR in the content transmission system if the operable DMR is present.

12. A gateway device according to claim 11,
wherein the gateway device, after generating the virtual DMR, confirms whether the operable DMR is present in the content reception system or not again, and, if the operable DMR corresponding to the virtual DMR is absent, suspends communication from the DMC and the DMS to the virtual DMR.

13. A program causing a computer to function as the gateway device according to any one of claims 9 to 12.
